# EUROPÄISCHE PATENTSCHRIFT

(11) **EP 1 677 980 B1**
(45) Veröffentlichungstag und Bekanntmachung des Hinweises auf die Patenterteilung: **25.04.2012**
(21) Anmeldenummer: 04765507.1
(22) Anmeldetag: 22.09.2004
(51) Int. Cl.: B32B 27/34, A22C 13/00

(54) **NAHRUNGSMITTELHÜLLE AUF POLYAMIDBASIS MIT RAUCHÜBERTRAG**
SMOKE-PERMEABLE POLYAMIDE BASED FOOD CASING
ENVELOPPE A BASE DE POLYAMIDE POUR DENREES ALIMENTAIRES, IMPREGNEE DE FUMEE

(30) Priorität: 26.09.2003 DE 10344867
(43) Veröffentlichungstag der Anmeldung: 12.07.2006
(73) Patentinhaber: Kalle GmbH, 65203 Wiesbaden (DE)
(72) Erfinder: AUF DER HEIDE, Dirk, 49594 Alfhausen (DE); AUF DER HEIDE, Christian, 49080 Osnabrück (DE); STALBERG, Stefanie, 65232 Taunusstein-Wehen (DE); KALLWEIT, Jürg-Heinrich, 49076 Osnabrück (DE)
(74) Vertreter: Plate, Jürgen
(86) Internationale Anmeldenummer: PCT/EP2004/010645
(87) Internationale Veröffentlichungsnummer: WO 2005/030480

(56) Entgegenhaltungen:
- EP-A- 1 192 864
- WO-A-97/36798
- WO-A-2004/043156
- WO-A-2004/068951
- WO-A-2004/082401
- WO-A-2004/083287
- WO-A-2005/002848
- DE-A- 10 124 581

## Beschreibung

Die Erfindung betrifft eine mit Flüssigrauch imprägnierte, schlauchförmige, ein- oder mehrschichtige Nahrungsmittelhülle auf der Basis von Polyamid und/oder Copolyamid oder mit einer innenliegenden Schicht auf Basis von Polyamid und/oder Copolyamid sowie die Verwendung der Hülle.

Käse- und Wurstwaren werden nach den verschiedensten Verfahren geräuchert, um sie in Geschmack und Farbe zu modifizieren und gleichzeitig zu konservieren. Grundsätzlich existieren zwei verschiedene Räucherverfahren für Nahrungsmittel in einer rauchdurchlässigen Umhüllung, wie Naturdarm, Textildarm, Kollagendarm, Cellulosedarm oder Cellulose-Faserdarm. Das ist zum einen das Rauchkammerverfahren, bei dem das Lebensmittel in einem Rauchnebel geräuchert wird. Zum anderen ist es das Flüssigrauchverfahren, bei dem Flüssigrauch aufgesprüht oder in Flüssigrauch eingetaucht wird. Beide Verfahren sind relativ zeitaufwendig und damit kostenintensiv. Abluft und Abwasser, die Rauchbestandteile enthalten, müssen zudem kostenaufwendig gereinigt werden. Lebensmittel in einer rauchdurchlässige Hülle sind darüber hinaus nur für kurze Zeit lagerfähig. Bei längerer Lagerung trocknen sie aus. Oft werden sie auch von Mikroorganismen befallen. Solche Lebensmittelprodukte werden daher häufig mit einer wasserdampf- und/oder sauerstoffundurchlässigen Zweitverpackung versehen. Eine Zweitverpackung führt jedoch zu weiteren negativen Begleiterscheinungen. Bei Fleischwurst ist vielfach ein Aussaften zu beobachten, bei Teewurst das Ansammeln von Fett unter der Zweitverpackung (das sogenannte "Ausfetten"). Es hat daher zahlreiche Ansätze gegeben, um dem Wursthersteller mit Hilfe von vorgeräucherten Nahrungsmittelhüllen ein separates Räuchern der Wurst zu ersparen und dabei gleichzeitig die Qualität des Nahrungsmittels zu optimieren.

Zu diesem Zweck wurden mit Flüssigrauch imprägnierte Nahrungsmittelhüllen entwickelt, die weitgehend undurchlässig sind für Wasserdampf, häufig auch für Luftsauerstoff. Eine solche rauchimprägnierte Kunststoff-Barrierehülle ist in der DE 101 24 581 A1 offenbart. Auf die Innenseite wird eine Mischung von Flüssigrauch und Bräunungsmittel aufgetragen. Die Mischung soll mindestens 5 Tage lang auf die Innenseite einwirken und dabei vollständig von dem Darm aufgenommen werden, bevor er zu Raupen gerafft wird. Besonders bevorzugt ist eine dreischichtige Hülle mit einer Außen- und Innenschicht aus Polyamid und einer mittleren Barriereschicht aus Polyethylen oder Ethylen/Vinylalkohol-Copolymer. Die Hülle nimmt nur relativ wenig Flüssigrauch auf, kann daher auch nur wenig Rauchfarbe auf das Nahrungsmittel übertragen. Um die Farbe zu verstärken, wird daher noch das Bräunungsmittel hinzugefügt.

In der DE-A 198 46 305 ist eine Barrierehülle aus einem Kunststoffmaterial beschrieben, die auf der Innenseite eine Lage aus einem saugfähigen Material (Gewebe, Gewirke oder Gestricke) aufweist, das mit Farb- oder Aromastoffen getränkt ist. Beim Kochen oder Brühen werden die Farb- oder Aromastoffe auf das von der Hülle umschlossene Lebensmittel übertragen. Die Verbindung der Innenlage mit der benachbarten Lage der Hülle erfolgt allgemein durch einen Kleber. Die Barrierehülle selbst besteht beispielsweise aus Polyamid- und Polyethylenschichten. Schlauchförmige Hüllen werden allgemein aus entsprechenden Flachfolie durch Heißsiegeln oder Kleben hergestellt. Im Bereich der Siegelnaht wird der Farb- oder Aromastoff oftmals ungleichmäßig übertragen. Auch zeigen gesiegelte oder geklebte Hüllen häufig einen ungleichmäßigen Schrumpf. Dann beobachtet man nach dem Brühen oder Kochen der Wurst in den Nahtbereichen ein unerwünschter Geleeabsatz zwischen Hülle und Wurstbrät.

Es bestand daher nach wie vor die Aufgabe, eine schlauchförmige Nahrungsmittelhülle mit Barriereeigenschaften zur Verfügung zu stellen, die eine ausreichende Menge an Flüssigrauch aufnehmen kann, so daß auf zusätzliche Bräunungsmittel verzichtet werden kann. Weiterhin soll die Hülle einfach und schnell herstellbar sein, d.h. sie soll sich praktisch unmittelbar nach der Imprägnierung mit Flüssigrauch konfektionieren lassen (d.h. insbesondere zu Raupen raffen lassen).

Gelöst wurde die Aufgabe mit einer ein- oder mehrschichtigen Kunststoff-Barrierehülle, bei der die innenliegende (mit dem Nahrungsmittel in Kontakt stehende) Schicht eine Schicht auf Basis von Polyamid und/oder Copolyamid entsprechend Anspruch 1 ist. Die Oberflächenspannung dieser Schicht beträgt mehr als 28 dyn/cm. Sie ist damit sehr gut benetzbar.

Gegenstand der Erfindung ist damit eine mit Flüssigrauch imprägnierte, schlauchförmige, ein- oder mehrschichtige Nahrungsmittelhülle auf der Basis von Polyamid und/oder Copolyamid bzw. mit einer innenliegenden Schicht auf Basis von Polyamid und/oder Copolyamid entsprechend Anspruch 1, wobei die Hülle eine Wasserdampfdurchlässigkeit weniger als 30 g/m² d zeigt und dadurch gekennzeichnet ist, daß die Innenseite der Hülle eine Oberflächenspannung von mehr als 28 dyn/cm aufweist und die Hülle innen mit Flüssigrauch imprägniert ist, jedoch nicht mit einem zusätzlichen Bräunungsmittel, und wobei nur so viel Flüssigrauch auf der Innenseite aufgebracht ist, wie diese aufnehmen kann.

Die Wasserdampfdurchlässigkeit der flüssigrauchimprägnierten Hülle beträgt bevorzugt 3 bis 25 g/m² d (bestimmt gemäß DIN 53 122, bei einer einseitigen Beaufschlagung der Hülle mit Luft, die eine Temperatur von 23 °C und eine relative Luftfeuchte von 85 % aufweist).

Die Oberflächenspannung beträgt bevorzugt etwa 35 bis 45 dyn/cm, besonders bevorzugt etwa 40 dyn/cm. Das bewirkt, daß der Flüssigrauch besonders gleichmäßig und homogen auf die Innenseite der Hülle aufgebracht werden kann. Um die richtige Oberflächenspannung einzustellen, wird die Innenseite der Hülle gegebenenfalls einer Corona-Behandlung unterzogen. Das erhöht die Oberflächenspannung und auch die Polarität der inneren Oberfläche der Hülle. Die Hülle bzw. die Polyamid-Innenschicht der Hülle hat einen Quellwert von mindestens 5 %, bevorzugt 8 bis 100 %, besonders bevorzugt etwa 10 bis 75 %, jeweils bei 23 °C. Das Aufquellen bewirkt, daß eine auch für Brüh- oder Teewurst ausreichende Menge an Flüssigrauch von der Hülle aufgenommen und bei der Weiterverarbeitung auf das Wurstbrät übertragen werden kann. Bei einer Temperatur von 21 °C nimmt sie dementsprechend in der bevorzugten Ausführungsform etwa 8 bis 100 % Wasser auf, bezogen auf das Gewicht der Hülle bzw. der Innenschicht der Hülle. Das entspricht bei einem Quellwert von 25 % einer Auftragsmenge von etwa 20 bis 30 g/m². Wichtig ist zudem die Viskosität des Flüssigrauchs. Sie wird allgemein so gewählt, daß der Flüssigrauch die Innenseite der Hülle gleichmäßig benetzt ohne dabei zusammenzulaufen oder Tropfen zu bilden. Die einschichtige Hülle bzw. die PA-Innenschicht der mehrschichtigen Hülle hat allgemein eine relativ große Dicke, damit sie eine ausreichende Menge an Flüssigrauch aufnehmen kann. Die Dicke liegt bei den einschichtigen Hüllen bei etwa 20 bis 130 µm. Bei den mehrschichtigen Hüllen beträgt die Dicke der Innenschicht in der Regel etwa 15 bis 70 µm.

Ein zusätzliches Bräunungsmittel ist nicht erforderlich und dementsprechend auch nicht vorhanden. Der Flüssigrauch selbst ist bevorzugt ein natürlicher, d.h. ein saurer Flüssigrauch, weil dieser allgemein farbintensiver ist und ein natürlicheres Aroma aufweist. Verwendbar ist jedoch auch neutraler oder alkalischer Flüssigrauch. Die Viskosität wird erforderlichenfalls durch den Zusatz von Carboxymethylcellulose (CMC) oder ähnlichen Additiven passend eingestellt.

Das Polyamid oder Copolyamid (abgekürzt (Co)Polyamid) ist ein aliphatisches, insbesondere ein lineares aliphatisches (Co)Polyamid. Dazu zählen beispielsweise Polyamid 6, Polyamid 6.6, PA 6/6.6 (ein Polyblend oder ein statistisches Copolyamid aus PA 6 und PA 6.6), Polyamid 4.6 (Polytetramethylenadipamid), Polyamid 6.10, Polyamid 6.12 (ein Copolyamid aus PA 6 und PA 12). Es können auch Mischungen verschiedener aliphatischer (Co)Polyamide eingesetzt werden.

Das Polyamid ist gegebenenfalls abgemischt mit mindestens einem teilaromatischen (Co)Polyamid, wie PA 6I/6T (einem Copolyamid auf Basis von Hexamethylendiamin, Isophthalsäure und Terephthalsäure). Der Anteil des teilaromatischen Copolyamids beträgt zweckmäßig nicht mehr als 30 Gew.-%, bezogen auf das Gewicht der einschichtigen Hülle bzw. der innenliegenden Polyamidschicht der mehrschichtigen Hülle.

Die Hülle bzw. die innenliegende PA-Schicht der Hülle kann darüber hinaus weitere Bestandteile enthalten. Das sind insbesondere Farbstoffe oder Farbpigmente, Sauerstoff-Scavenger, UV-Absorber, organische oder anorganische Füllstoffe, thermoplastifizierte Stärke und/oder wasserlösliche Polymere, wie Polyvinylalkohol oder Polyvinylpyrrolidon.

Die weiteren Schichten in der mehrschichtigen Ausführungsform können aus weitgehend beliebigen Materialien bestehen. Bevorzugt handelt es sich um Schichten auf Basis von Polyolefin, insbesondere Polyethylen, Polypropylen, Polybutylen, LLDPE (Linear Low Density Polyethylene), EthylenNinylalkohol-Copolymeren oder Polyamid.

Zwischen den einzelnen Schichten können sich noch dünne (etwa 2 bis 6 µm) Haftschichten befinden. Gut geeignete Materialien für die Haftschicht sind insbesondere Pfropfpolymere, beispielsweise Polyolefine, die mit Maleinsäureanhydrid gepfropft sind, daneben auch Co- oder Terpolymere, die neben Ethylen- und/oder Propylen-Einheiten noch Einheiten mit funktionelle Gruppen enthalten. Die Einheiten mit funktionellen Gruppen sind beispielsweise (Meth)acrylsäure, (Meth)acrylsäurealkylester oder Vinylacetat. Ein geeigneter Haftvermittler ist ferner gummimodifiziertes Polyethylen.

Die Anzahl der Schichten ist prinzipiell nicht begrenzt, aus praktischen Gründen sind jedoch Hüllen mit nicht mehr als 5 Schichten, einschließlich etwaiger Haftschichten, bevorzugt. Weiterhin ist ein symmetrischer Aufbau günstig, um die Anzahl der bei der Herstellung benötigten Extruder gering zu halten. Ein solcher vorteilhafter Aufbau ist beispielsweise Polyamid/LLDPE/Polyamid.

Die erfindungsgemäße Hülle in einer einschichtigen wie auch in der mehrschichtigen Ausführungsform ist allgemein biaxial verstreckt, in der Regel auch thermofixiert oder blasgeformt. Der Restschrumpf beträgt bei den orientierten Hüllen allgemein nicht mehr als 20 % in Längs- oder Querrichtung (bestimmt nach 20 min Lagerung in Wasser von 80 °C).

Bei der Herstellung der erfindungsgemäßen Hülle können bekannte ein- oder mehrschichtige Kunststoffhüllen eingesetzt werden. Die Innenimprägnierung erfolgt dann beispielsweise durch eine Flüssigkeitsblase, die in einer kontinuierlich neu gebildeten Schlaufe der Hülle gehalten wird (bekannt als "slug coating"). Ein solches Verfahren ist im übrigen auch in der einleitend genannten DE 101 24 581 A1 beschrieben. Alternativ kann die Flüssigkeitsblase auch durch Abquetschen mit einem Quetschwalzenpaar in Position gehalten werden, während sich die Hülle weiterbewegt. Die Flüssigrauchimprägnierung kann sogar direkt vor dem Aufwickeln erfolgen. Die Innenseiten der flachgelegten Hülle verkleben dabei überraschenderweise nicht. Die Hülle kann anschließend weiter konfektioniert werden, d.h. beispielsweise zu Raupen gerafft oder in kurze Abschnitte geteilt werden, die dann einseitig verschlossen werden. Der Flüssigrauch bildet überraschenderweise keine Tropfen auf der Innenseite. Allgemein ist nicht mehr Flüssigrauch aufgebracht als die Hülle aufnehmen kann. Die mit der erfindungsgemäßen Hülle hergestellten Nahrungsmittel zeigen zudem eine praktisch homogene Oberflächenfärbung, d.h. der Flüssigrauch ist gleichmäßig übertragen worden. Eine Einwirkzeit des Flüssigrauchs von mindestens 5 Tagen, wie in der DE-A als wesentlich beschrieben, ist nicht erforderlich. Auch diese Beobachtung war für den Fachmann unerwartet.

Die erfindungsgemäße Hülle wird auf ihrer Außenseite gegebenenfalls mit einer Wasser-in-Öl-Emulsion behandelt, die Fungizide und/oder Konservierungsmittel enthält. Das sind beispielsweise para-Hydroxy-benzoesäureester, Kaliumsorbat, Kaliumpropionat oder Propylenglykol. Die Ölkomponente ist beispielsweise ein Paraffinöl.

Verwendung findet die erfindungsgemäße Hülle insbesondere als künstliche Wursthülle, speziell für Brühwurst (beispielsweise Fleischwurst) oder Rohwurst (beispielsweise Teewurst).

Die nachfolgenden Beispiele dienen zur Illustration der Erfindung. Prozente sind darin Gewichtsprozente, soweit nicht anders angegeben oder aus dem Zusammenhang ersichtlich. "Gt" steht für Gewichtsteil(e).

### Beispiel 1: (Polyamid-Monohülle)

Eine nahtlose, blasgeformte Hülle auf Basis von Polyamid 6.6 mit einem Kaliber von 40 mm und einer Wandstärke von 50 µm wurde innen mit Hilfe einer Flüssigkeitsblase mit einem natürlichen Flüssigrauch beaufschlagt, der eine Viskosität von 18 s (gemessen mit dem Ford-4-Becher) aufwies. Die Abquetschung der Flüssigkeitsblase war so eingestellt, daß die innere Oberfläche der Hülle mit 23 g Flüssigrauch pro Quadratmeter benetzt wurde. Unmittelbar anschließend wurde die Hülle wieder aufgewickelt. Sie wurde sodann gerafft und mit Teewurstbrät gefüllt. Teewurst ist eine streichfähige Rohwurst. Sie wurde dementsprechend 3Tage lang bei 22 °C und 65 % relativer Luftfeuchte gereift. Der Gewichtsverlust nach der Reifzeit betrug nicht mehr als 4 bis 6 %. Nach dem Abschälen der Hülle zeigte sich, daß die Oberfläche des Teewurstbräts gleichmäßig und intensiv eingefärbt war und den gewünschten kräftigen Räuchergeschmack und das entsprechende Aroma aufwies.

### Beispiel 2: (dreischichtige Hülle)

Eine nahtlose, biaxial verstreckte und thermofixierte 3-schichtige Hülle mit einem von Kaliber 45 mm, die eine 22 bis 27 µm dicke Schicht aus aliphatischem Polyamid (PA 6) außen, eine etwa 5 bis 10 µm dicke zentrale Schicht aus einem Gemisch von einem Polyolefin (LLDPE) und einem Haftvermittler (mit Maleinsäureanhydrid gepfropftes PE) und eine 22 bis 27 µm dicke Schicht aus einem Gemisch von aliphatischem Polyamid (PA 6) und teilaroamatischem Polyamid (PA 6I/6T; Mischungsverhältnis 70 : 30 Gt) innen aufwies, wurde innen mit Hilfe einer Flüssigkeitsblase beaufschlagt mit einem natürlichen Flüssigrauch, der eine Viskosität von 15 s (gemessen mit dem Ford-4-Becher) aufwies. Die Abquetschung der Flüssigkeitsblase war so eingestellt, daß die innere Oberfläche der Hülle mit 23 g Flüssigrauch pro Quadratmeter benetzt wurde. Unmittelbar anschließend wurde die Hülle wieder aufgewickelt. Sie wurde sodann gerafft und mit Fleischwurstbrät gefüllt. Die Fleischwurst wurde 80 min lang bei 78 °C und 100 % relativer Luftfeuchte gebrüht und anschließend 10 min bei 10 °C und ebenfalls 100 % relativer Luftfeuchte gekühlt. Die Wurst wurde dann 5 Tage lang gelagert. Der Gewichtsverlust nach dieser Lagerzeit betrug nicht mehr als 0,5 %. Nach dem Abschälen der Hülle zeigte sich, daß die Oberfläche des Wurstbräts gleichmäßig und intensiv eingefärbt war und den gewünschten typischen Räuchergeschmack und das Räucheraroma aufwies.

## Patentansprüche

1. Mit Flüssigrauch imprägnierte, schlauchförmige, ein- oder mehrschichtige Nahrungsmittelhülle auf der Basis von aliphatischen Polyamid und/oder aliphatischem Copolyamid oder einer Mischung davon mit teilaromatischem Polyamid und/oder teilaromatischem Copolyamid oder mit einer innenliegenden Schicht auf Basis von aliphatischem Polyamid und/oder aliphatischem Copolyamid oder einer Mischung davon mit teilaromaitischem Polyamid und/oder teilaromatischem Copolyamid, wobei die Hülle eine Wasserdampfdurchlässigkeit von weniger als 30 g/m² d zeigt, **dadurch gekennzeichnet, daß** die Innenseite der Hülle eine Oberflächenspannung von mehr als 28 dyn/cm aufweist und die Hülle innen mit Flüssigrauch imprägniert ist - jedoch nicht mit einem zusätzlichen Bräunungsmittel - und wobei nur so viel Flüssigrauch auf der Innenseite aufgebracht ist, wie diese aufnehmen kann. -

2. Nahrungsmittelhülle gemäß Anspruch 1, **dadurch gekennzeichnet, daß** die Oberflächenspannung der Innenseite 35 bis 45 dyn/cm, bevorzugt etwa 40 dyn/cm, beträgt.

3. Nahrungsmittelhülle gemäß Anspruch 1 oder 2, **dadurch gekennzeichnet, daß** die Hülle bzw. die Polyamid-Innenschicht der Hülle einen Quellwert von mindestens 5 %, bevorzugt 8 bis 100 %, besonders bevorzugt 10 bis 75 %, jeweils bei 23 °C, aufweist.

4. Nahrungsmittelhülle gemäß einem oder mehreren der Ansprüche 1 bis 3, **dadurch gekennzeichnet, daß** ihre Wasserdampfdurchlässigkeit 3 bis 25 g/m² d beträgt.

5. Nahrungsrrüttelhülle gemäß einem oder mehreren der Ansprüche 1 bis 4, **dadurch gekennzeichnet, daß** sie nahtlos ist.

6. Nahrungsmittelhülle gemäß einem oder mehreren der Ansprüche 1 bis 5, **dadurch gekennzeichnet, daß** sie biaxial verstreckt und thermofixiert oder blasgeformt ist.

7. Nahrungsmittelhülle gemäß Anspruch 6, **dadurch gekennzeichnet, daß** sie biaxial verstreckt ist und einen Restschrumpf von weniger als 20 % in Längs- und Querrichtung aufweist.

8. Nahrungsmittelhülle gemäß einem oder mehreren der Ansprüche 1 bis 7, **dadurch gekennzeichnet, daß** sie auf der Innenseite coronabehandelt ist.

9. Nahrungsmittelhülle gemäß einem oder mehreren der Ansprüche 1 bis 8, **dadurch gekennzeichnet, daß** die Dicke der einschichtigen Hülle 20 bis 130 µm beträgt.

10. Nahrungsmittelhülle gemäß einem oder mehreren der Ansprüche 1 bis 8, **dadurch gekennzeichnet, daß** die Dicke der Polyamid-Innenschicht der mehrschichtigen Hülle 15 bis 70 µm beträgt.

11. Verwendung der Nahrungsmittelhülle gemäß einem oder mehreren der Ansprüche 1 bis 10 als künstliche Wursthülle, insbesondere für Brüh-, Koch- oder Rohwurst.

## Claims

1. A liquid-smoke-impregnated, tubular, single-layer or multilayered food casing which is based on aliphatic polyamide and/or aliphatic copolyamide or a mixture thereof with partially aromatic polyamide and/or partially aromatic copolyamide, or has an inner layer based on aliphatic polyamide and/or aliphatic copolyamide or a mixture thereof with partially aromatic polyamide and/or partially aromatic copolyamide, the casing exhibiting a water vapor permeability of less than 30 g/m² d, wherein the inside of the casing has a surface tension of greater than 28 dyn/cm and the casing is impregnated on the inside with liquid smoke - but not with an additional browning agent - and only as much liquid smoke being applied to the inside as the latter can absorb.

2. The food casing as claimed in claim 1, wherein the surface tension of the inside is 35 to 45 dyn/cm, preferably about 40 dyn/cm.

3. The food casing as claimed in claim 1 or 2, wherein the casing or the polyamide inner layer of the casing has a swelling value of at least 5 %, preferably 8 to 100 %, particularly preferably 10 to 75 %, in each case at 23 °C.

4. The food casing as claimed in one or more of claims 1 to 3, wherein its water vapor permeability is 3 to 25 g/m² d.

5. The food casing as claimed in one or more of claims 1 to 4, wherein it is seamless.

6. The food casing as claimed in one or more of claims 1 to 5, wherein it is biaxially oriented and heat set or blown.

7. The food casing as claimed in claim 6, wherein it is biaxially oriented and has a residual shrinkage of less than 20 % in the longitudinal and transverse directions.

8. The food casing as claimed in one or more of claims 1 to 7, wherein it is corona-treated on the inside.

9. The food casing as claimed in one or more of claims 1 to 8, wherein the thickness of the single-layered casing is 20 to 130 µm.

10. The food casing as claimed in one or more of claims 1 to 8, wherein the thickness of the polyamide inner layer of the multilayered casing is 15 to 70 µm.

11. The use of the food casing as claimed in one or more of claims 1 to 10 as artificial sausage casing, in particular for scalded-emulsion sausage, cooked-meat sausage, or raw sausage.

## Revendications

1. Enveloppe pour produits alimentaires à une ou plusieurs couches, tubulaire, imprégnée de fumée liquide, à base de polyamide aliphatique et/ou de copolyamide aliphatique ou d'un mélange de ceux-ci avec un polyamide partiellement aromatique et/ou d'un copolyamide partiellement aromatique ou avec une couche interne à base d'un polyamide aliphatique et/ou d'un copolyamide aliphatique ou d'un mélange de ceux-ci avec un polyamide partiellement aromatique et/ou un copolyamide partiellement aromatique, dans laquelle l'enveloppe présente une perméabilité à la vapeur d'eau inférieure à 30 g/m² par jour, **caractérisée en ce que** la face interne de l'enveloppe présente une tension de surface supérieure à 28 dyn/cm et **en ce que** l'enveloppe est imprégnée à l'intérieur de fumée liquide - toutefois non pas avec un agent de brunissement supplémentaire - et dans laquelle il n'est appliqué que la quantité suffisante de fumée liquide sur la face interne que cette dernière est en mesure d'absorber.

2. Enveloppe pour produits alimentaires selon la revendication 1, **caractérisée en ce que** la tension de surface de la face interne est de 35 à 45 dyn/cm, de préférence d'environ 40 dyn/cm.

3. Enveloppe pour produits alimentaires selon la revendication 1 ou 2, **caractérisée en ce que** l'enveloppe ou la couche interne de polyamide de l'enveloppe présente un taux de gonflement d'au moins 5 %, de préférence de 8 à 100 %, mieux encore de 10 à 75 %, respectivement à une température de 23 °C.

4. Enveloppe pour produits alimentaires selon l'une quelconque ou plusieurs des revendications 1 à 3, **caractérisée en ce que** sa perméabilité à la vapeur d'eau est de 3 à 25 g/m² par jour.

5. Enveloppe pour produits alimentaires selon l'une quelconque ou plusieurs des revendications 1 à 4, **caractérisée en ce qu'**elle est sans couture.

6. Enveloppe pour produits alimentaires selon l'une quelconque ou plusieurs des revendications 1 à 5, **caractérisée en ce qu'**elle est étirée biaxialement et thermofixée ou soufflée.

7. Enveloppe pour produits alimentaires selon la revendication 6, **caractérisée en ce qu'**elle est étirée biaxialement et présente un rétrécissement résiduel inférieur à 20 % dans les directions longitudinale et transversale.

8. Enveloppe pour produits alimentaires selon l'une quelconque ou plusieurs des revendications 1 à 7, **caractérisée en ce qu'**elle est soumise à un traitement corona sur sa face interne.

9. Enveloppe pour produits alimentaires selon l'une quelconque ou plusieurs des revendications 1 à 8, **caractérisée en ce que** l'épaisseur de l'enveloppe à une couche est de 20 à 130 µm.

10. Enveloppe pour produits alimentaires selon l'une quelconque ou plusieurs des revendications 1 à 8, **caractérisée en ce que** l'épaisseur de la couche interne de polyamide de l'enveloppe à plusieurs couches est de 15 à 70 µm.

11. Utilisation de l'enveloppe pour produits alimentaires selon l'une quelconque ou plusieurs des revendications 1 à 10 comme enveloppe artificielle pour saucisses, en particulier pour la saucisse à bouillir, la saucisse à cuire ou la saucisse crue.
